# EUROPEAN PATENT APPLICATION

(11) **EP 2 869 616 A1**
(43) Date of publication of application: **06.05.2015**
(21) Application number: 12880211.3
(22) Date of filing: 29.06.2012
(51) Int. Cl.: H04W 16/02

(54) **METHOD, APPARATUS AND SYSTEM FOR ELIMINATING INTERFERENCE OF COMMON REFERENCE SIGNAL**

(71) Applicant: Fujitsu Limited, Kawasaki-shi, Kanagawa 211-8588 (JP)
(72) Inventor: WU, Lianhai, Beijing 100025 (CN); CHANG, Ningjuan, Beijing 100025 (CN); XU, Haibo, Beijing 100025 (CN)
(74) Representative: Lewin, David Nicholas
(86) International application number: PCT/CN2012/077827
(87) International publication number: WO 2014/000244

(57) **Abstract**

An interference cancellation method for a common reference signal, eNB and system. The method includes: notifying assistance information for interference cancellation by a pico cell to a neighboring cell; wherein the assistance information for interference cancellation includes first related information of a neighboring cell interfering with the pico cell, or includes second related information of a neighboring cell that collides with the common reference signal of the pico cell in neighboring cells interfering with the pico cell. With the embodiments of the present invention, the eNB of the neighboring cell is enabled to receive the assistance information for interference cancellation, and configure the UE served by the neighboring cell with the assistance information for interference cancellation, so that the UE having an ability to cancel interference may perform interference cancellation according to the assistance information for interference cancellation, thereby solving the problem of too-late handover.

## Description

### Technical Field

The present invention relates to the field of communications, and in particular to an interference cancellation method for a common reference signal, an interference cancellation apparatus and system for the same.

### Background

In a heterogeneous network, the system capacity is increased or the range is expanded by deploying an eNB with low power, such as a pico eNB and a femto eNB, remote radio heads, and relay nodes.

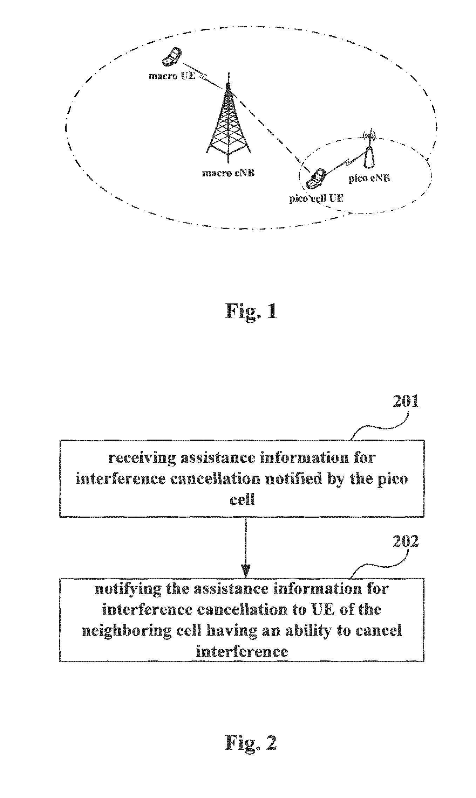

Figure 1 is a schematic diagram of a structure of a heterogeneous network. As shown in Fig. 1, if a pico cell employs a range expansion (RE) technology, downlink transmission of a macro eNB will bring intense interference to downlink transmission of a pico eNB. By configuring a downlink almost blank subframe (ABS) at the macro eNB side, pico UE is scheduled on the ABS for performing downlink reception, thereby avoiding downlink intense interference of the macro eNB to the pico UE. The ABS refers to a subframe transmitting a signal at reduced power.

In the ABS scheme, a common reference signal (CRS) of the macro eNB will be transmitted at normal power, thereby bringing intense interference to the pico cell. In such a scenario, the pico eNB will notify related information of an interference source to user equipment (UE) having an ability to cancel interference via radio resource control (RRC) signaling, and the UE cancels interference in data demodulation and measurement by using the information.

In the implementation of the present invention, the inventors found that in a scenario where there is CRS collision between a neighboring cell and a pico cell, UE located at an edge of a pico cell and subjected to intense interference of a macro eNB (i.e. victim UE served by pico) will perform interference cancellation according to interference source information notified by the pico cell in performing radio resource management (RRM) measurement of a serving cell. However, for UE of a neighboring cell, there is no an existing method for effectively performing CRS interference cancellation at present.

It should be noted that the above description of the background is merely provided for clear and complete explanation of the present invention and for easy understanding by those skilled in the art. And it should not be understood that the above technical solution is known to those skilled in the art as it is described in the background of the present invention.

### Summary

An object of embodiments of the present invention is to provide an interference cancellation method for a common reference signal, an interference cancellation apparatus and system for the same; wherein a pico cell may notify assistance information for interference cancellation to a neighboring cell, and the neighboring cell may configure UE served by that neighboring cell with the assistance information, so that the UE served by that neighboring cell performs CRS interference cancellation according to the assistance information, thereby avoiding a problem of too-late handover.

According to an aspect of the embodiments of the present invention, there is provided an interference cancellation method for a common reference signal, including:
notifying assistance information for interference cancellation by a pico cell to a neighboring cell;
wherein the assistance information for interference cancellation includes first related information of a neighboring cell interfering with the pico cell, or includes second related information of a neighboring cell that collides with the common reference signal of the pico cell in neighboring cells interfering with the pico cell.

According to another aspect of the embodiments of the present invention, there is provided an interference cancellation method for a common reference signal, including:
receiving, by a neighboring cell of a pico cell, assistance information for interference cancellation notified by the pico cell;
wherein the assistance information for interference cancellation includes first related information of a neighboring cell interfering with the pico cell, or includes second related information of a neighboring cell that collides with the common reference signal of the pico cell in neighboring cells interfering with the pico cell; and
notifying the assistance information for interference cancellation to UE served by the neighboring cell having an ability to cancel interference.

According to still another aspect of the embodiments of the present invention, there is provided an interference cancellation method for a common reference signal, including:
receiving, by UE of a neighboring cell of a pico cell, assistance information for interference cancellation notified by the neighboring cell; wherein the assistance information for interference cancellation includes first related information of a neighboring cell interfering with the pico cell, or includes second related information, or third related information of a neighboring cell that collides with the common reference signal of the pico cell in neighboring cells interfering with the pico cell; and
canceling interference of the common reference signal by the UE according to the assistance information for interference cancellation in performing radio resource management measurement of the pico cell.

According to still another aspect of the embodiments of the present invention, there is provided a pico eNB, including:
a first notifying unit configured to notify assistance information for interference cancellation to a neighboring cell; wherein the assistance information for interference cancellation includes first related information of a neighboring cell interfering with the pico cell, or includes second related information of a neighboring cell that collides with the common reference signal of the pico cell in neighboring cells interfering with the pico cell.

According to still another aspect of the embodiments of the present invention, there is provided an eNB, which is an eNB of a neighboring cell neighboring a pico cell, and the eNB including:
a first receiving unit configured to receive assistance information for interference cancellation notified by the pico cell; wherein the assistance information for interference cancellation includes first related information of a neighboring cell interfering with the pico cell, or includes second related information of a neighboring cell that collides with the common reference signal of the pico cell in neighboring cells interfering with the pico cell; and
a second notifying unit configured to notify the assistance information for interference cancellation to UE in the eNB having an ability to cancel interference.

According to still another aspect of the embodiments of the present invention, there is provided UE, having an ability to cancel interference and belonging to a neighboring cell neighboring a pico cell, the UE including:
a second receiving unit configured to receive assistance information for interference cancellation notified by the neighboring cell, wherein the assistance information for interference cancellation includes first related information of a neighboring cell interfering with the pico cell, or includes second related information or third related information of a neighboring cell that collides with the common reference signal of the pico cell in neighboring cells interfering with the pico cell; and
a first processing unit configured to cancel interference of the common reference signal according to the assistance information for interference cancellation in performing radio resource management measurement of the pico cell.

According to still another aspect of the embodiments of the present invention, there is provided a heterogeneous network system, including:
a pico eNB configured to notify assistance information for interference cancellation to a neighboring cell; wherein the assistance information for interference cancellation includes first related information of a neighboring cell interfering with the pico cell or includes second related information of a neighboring cell that collides with the common reference signal of the pico cell in neighboring cells interfering with the pico cell;
a macro eNB and/or other pico eNBs, neighboring the pico eNB, configured to receive assistance information for interference cancellation notified by the pico cell, and notify the assistance information for interference cancellation to UE served by the macro cell and/or the other pico cells having an ability to cancel interference; and

UE configured to receive assistance information for interference cancellation notified by the macro eNB and/or other pico eNBs neighboring the pico eNB, and cancel interference of the common reference signal according to the assistance information for interference cancellation in performing radio resource management measurement of the pico cell.

According to still another aspect of the embodiments of the present invention, there is provided a computer-readable program, wherein when the program is executed in a pico eNB, the program enables a computer to carry out the interference cancellation method for a common reference signal as described above in the pico eNB.

According to still another aspect of the embodiments of the present invention, there is provided a storage medium in which a computer-readable program is stored, wherein the computer-readable program enables a computer to carry out the interference cancellation method for a common reference signal as described above in a pico eNB.

According to still another aspect of the embodiments of the present invention, there is provided a computer-readable program, wherein when the program is executed in an eNB, the program enables a computer to carry out the interference cancellation method for a common reference signal as described above in the eNB.

According to still another aspect of the embodiments of the present invention, there is provided a storage medium in which a computer-readable program is stored, wherein the computer-readable program enables a computer to carry out the interference cancellation method for a common reference signal as described above in an eNB.

According to still another aspect of the embodiments of the present invention, there is provided a computer-readable program, wherein when the program is executed in UE, the program enables a computer to carry out the interference cancellation method for a common reference signal as described above in the UE.

According to still another aspect of the embodiments of the present invention, there is provided a storage medium in which a computer-readable program is stored, wherein the computer-readable program enables a computer to carry out the interference cancellation method for a common reference signal as described above in UE.

An advantage of the embodiments of the present invention exists in that the pico cell may notify the neighboring cell of the assistance information for interference cancellation; in this way, after receiving the assistance information for interference cancellation, the neighboring cell configures the UE served by the neighboring cell having an ability to cancel interference with the assistance information for interference cancellation, so that the UE having an ability to cancel interference may perform interference cancellation according to the assistance information for interference cancellation in performing RRM measurement, thereby avoiding a problem of too-late handover.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brier Description of the Drawings

The above and other objects, features and advantages of the present invention will be apparent from the following detailed description in conjunction with the drawings, in which:
Figure 1 is a schematic diagram of a structure of a heterogeneous network;
Figure 2 is a flowchart of the interference cancellation method of Embodiment 2 of the present invention;
Figure 3 is a flowchart of the interference cancellation method of Embodiment 3 of the present invention;
Figure 4 is a schematic diagram of a structure of a pico eNB of Embodiment 4 of the present invention;
Figure 5 is a schematic diagram of a structure of an information acquiring unit of Embodiment 4 of the present invention;
Figure 6 is a schematic diagram of a structure of an eNB of Embodiment 5 of the present invention;
Figure 7 is a schematic diagram of a structure of UE of Embodiment 6 of the present invention;
Figure 8 is a schematic diagram of a structure of a first processing unit of Embodiment 6 of the present invention;
Figure 9 is a schematic diagram of a structure of a heterogeneous network of Embodiment 7 of the present invention; and
Figure 10 is a flowchart of the interference cancellation method of Embodiment 8 of the present invention.

### Detailed Description

Various embodiments of the present invention are described as follows with reference to the drawings. These embodiments are illustrative only, and are not intended to limit the present invention. For the principle and modes of implementation of the present invention to be easily understood by those skilled in the art, the modes of implementation of the present invention shall be described taking CRS interference cancellation in a heterogeneous network as an example. However, it should be understood that the present invention is not limited to the above system, and is applicable to other systems related to CRS interference cancellation.

Currently, in a scenario where CRSs of a neighboring cell and a pico cell collide, UE located at an edge of a pico cell and subjected to intense interference (i.e. pico victim UE) will perform interference cancellation according to related information notified by the pico cell in performing RRM measurement of a serving cell. However, for UE of a neighboring cell neighboring the pico eNB, there exists no effective method for canceling CRS interference in performing RRM measurement of a pico cell, hence, a problem of too-late handover will inevitably be produced.

Embodiment 1 of the present invention provides an interference cancellation method for a CRS, including: notifying assistance information for interference cancellation by a pico cell to a neighboring cell; wherein the assistance information for interference cancellation includes first related information of a neighboring cell interfering with the pico cell, or includes second related information of a neighboring cell that collides with the common reference signal of the pico cell in neighboring cells interfering with the pico cell.

In this way, after receiving the assistance information for interference cancellation, the neighboring cell configures UE served by the neighboring cell having an ability to cancel interference with the assistance information for interference cancellation, so that the UE may perform interference cancellation according to the assistance information for interference cancellation in performing RRM measurement, thereby avoiding a problem of too-late handover. The embodiments of the present invention shall be described below with reference to the drawings.

In this embodiment, the first related information and the second related information include: cell ID, the number of antenna ports and multicast/broadcast single frequency network (MBSFN) frame configuration information.

In this embodiment, the first related information is referred to as interference source neighboring cell set information, and the second related information is referred to as CRS colliding neighboring cell set information.

In this embodiment, the assistance information for interference cancellation may be notified to the neighboring cell via an X2 interface of the pico cell.

In this embodiment, before notifying the assistance information for interference cancellation by the pico cell to the neighboring cell, the method further includes: acquiring the assistance information for interference cancellation.

In this embodiment, the acquiring the first related information includes: determining a neighboring cell interfering with the pico cell, i.e. interference source neighboring cells, by the pico cell according to a measurement result reported by UE served by the pico cell, so as to acquire the first related information;
and the notifying the assistance information for interference cancellation by the pico cell to the neighboring cell includes: notifying the determined first related information of the neighboring cell to the neighboring cell, that is, notifying interference source neighboring cell set information to the neighboring cell; wherein, the neighboring cell may be a macro cell in a heterogeneous network, and may also be other pico cells in a heterogeneous network.

In this embodiment, the acquiring the second related information includes: determining neighboring cells interfering with the pico cell, i.e. interference source neighboring cells, by the pico cell according to a measurement result reported by UE served by the pico cell ; and selecting a neighboring cell that collides with the common reference signal of the pico cell, i.e. a CRS colliding neighboring cell set, in the interference source neighboring cells, so as to acquire the second related information;
and the notifying the assistance information for interference cancellation by the pico cell to the neighboring cell includes: notifying the second related information of the neighboring cell that collides with the common reference signal of the pico cell to the neighboring cell, that is, notifying the CRS colliding neighboring cell set information to the neighboring cell.

Furthermore, in this embodiment, the pico cell notifies the assistance information for interference cancellation not only to the neighboring cell, but also to the UE served by the pico cell having an ability to cancel interference.

Fig. 2 is a flowchart of the interference cancellation method of Embodiment 2 of the present invention, which is directed to a neighboring cell neighboring a pico cell, the neighboring cell being a macro cell, or other pico cells. As shown in Fig. 2, the method includes:
step 201: receiving, by a neighboring cell neighboring a pico cell, assistance information for interference cancellation notified by the pico cell;
wherein the assistance information for interference cancellation includes first related information of a neighboring cell interfering with the pico cell, or includes second related information of a neighboring cell that collides with the common reference signal of the pico cell in neighboring cells interfering with the pico cell;
step 202: notifying the assistance information for interference cancellation to UE served by the neighboring cell having an ability to cancel interference;
wherein, the assistance information for interference cancellation may be contained in a CellsToAddMod information element for being transmitted to the UE having an ability to cancel interference;
when the pico cell notifies the first related information or the second related information, the neighboring cell neighboring the pico cell directly notifies the first related information or the second related information to the UE served by the neighboring cell, so as to perform measuring configuration of neighboring cell on the UE served by the neighboring cell;
furthermore, when the pico cell notifies the first related information, the neighboring cell neighboring the pico cell may select a neighboring cell colliding with the common reference signal of the pico cell according to the first related information, and then notifies third related information of the selected neighboring cell colliding with the common reference signal of the pico cell to the UE served by the neighboring cell having an ability to cancel interference.

In this embodiment, the assistance information for interference cancellation is as described in Embodiment 1, which shall not be described herein any further. And the neighboring cell neighboring the pico cell may be a macro cell, and may also be other pico cells.

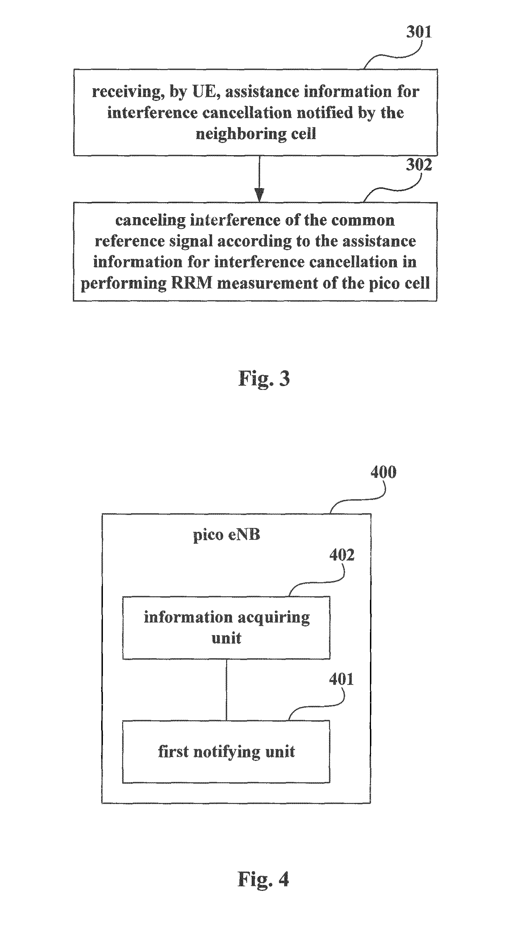

Fig. 3 is a flowchart of the interference cancellation method of common reference signal of Embodiment 3 of the present invention. As shown in Fig. 3, directed to UE having an ability to cancel interference, the method includes:
step 301: receiving, by UE of a neighboring cell neighboring a pico cell, assistance information for interference cancellation notified by the neighboring cell; wherein the assistance information for interference cancellation includes first related information of a neighboring cell interfering with the pico cell, or includes second related information or third related information of a neighboring cell that collides with the common reference signal of the pico cell in neighboring cells interfering with the pico cell; and
step 302: canceling interference of the common reference signal by the UE according to the assistance information for interference cancellation in performing radio resource management measurement of the pico cell.

In step 301, when the assistance information for interference cancellation includes the first related information, the UE first selects a cell colliding with the common reference signal of the pico cell according to the first related information in step 302, and then cancels the interference caused by the selected cell to the common reference signal of the pico cell.

In step 301, when the assistance information for interference cancellation includes the second related information or third related information, the UE cancels the interference caused by all the cells in the second related information or third related information to the pico cell in step 302.

It can be seen from the above embodiment that the pico cell notifies the acquired interference source neighboring cell set information or the CRS colliding neighboring cell set information to the neighboring cell neighboring the pico cell, and after receiving the interference source neighboring cell set information or the CRS colliding neighboring cell set information, the neighboring cell neighboring the pico cell configures the UE served by the neighboring cell having an ability to cancel interference with the information, so that the UE may perform CRS interference cancellation according to the information in performing RRM measurement on the pico cell, thereby solving the problem of too-late handover.

A person of ordinary skill in the art may understand that all or part of the steps in the method carrying out the above embodiment may be carried out by related hardware instructed by a program. The program may be stored in a computer-readable storage medium. And when being executed, the program may include all or part of the steps in the method in the above embodiment, and the storage medium may include an ROM, an RAM, a floppy disc, and a compact disc, etc.

Embodiment of the present invention further provides a pico eNB, an eNB and UE, as described in the embodiments below. As the principles of the pico eNB, the eNB and the UE for solving problems are similar to that of the above interference cancellation method based on a pico eNB, an eNB and UE, the implementation of the method may be referred to for the implementation of pico eNB, the eNB and the UE, and the repeated parts shall not be described any further.

Fig. 4 is a schematic diagram of a structure of a pico eNB of Embodiment 4 of the present invention. As shown in Fig. 4, the pico eNB 400 includes: a first notifying unit 401 configured to notify assistance information for interference cancellation to a neighboring cell.
wherein, the assistance information for interference cancellation includes first related information of a neighboring cell interfering with the pico cell, or includes second related information of a neighboring cell that collides with the common reference signal of the pico cell in neighboring cells interfering with the pico cell.

It can be seen from the above embodiment that the pico eNB 400 notifies the assistance information for interference cancellation to the neighboring cell via the first notifying unit 401, so that the neighboring cell configures the UE served by the neighboring cell having an ability to cancel interference with the assistance information for interference cancellation, and the UE having an ability to cancel interference may perform interference cancellation according to the related information in performing RRM measurement on the pico cell, thereby solving the existed problem and avoiding the problem of too-late handover.

In this embodiment, the first related information and the second related information include ID of a cell, the number of antenna ports, and multicast/broadcast single frequency network (MBSFN) frame configuration information.

As shown in Fig. 4, the pico eNB 400 further includes: an information acquiring unit 402 configured to acquire the assistance information for interference cancellation.

In this embodiment, the information acquiring unit 402 is further configured to determine a neighboring cell interfering with the pico cell according to a measurement result reported by UE of the pico eNB, thereby obtaining the first related information;
and in this case, the first notifying unit 401 is further configured to notify the first related information of the neighboring cell determined by the information acquiring unit 402 to the neighboring cell.

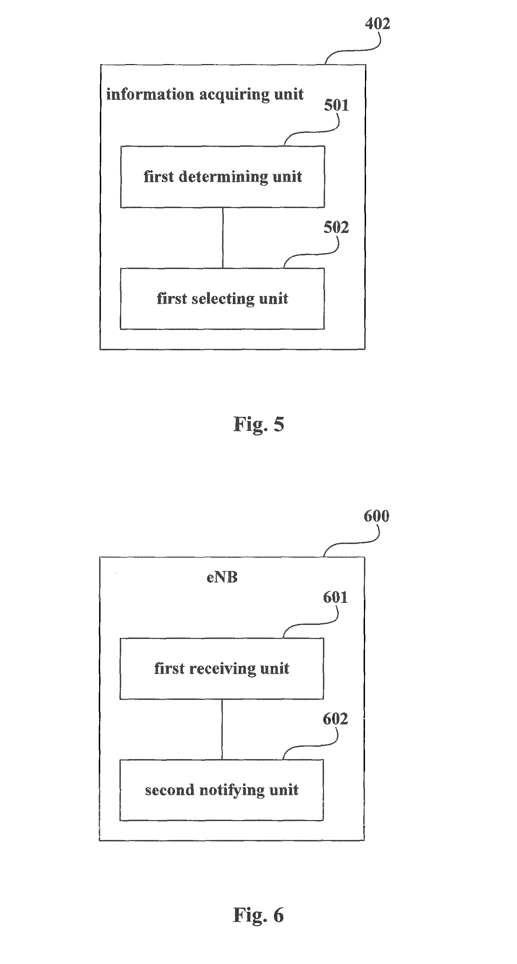

In another embodiment, the information acquiring unit 402 is further configured to acquire the second related information, and its structure is as shown in Fig. 5.

Fig. 5 is a schematic diagram of the structure of the information acquiring unit of Embodiment 4 of the present invention. As shown in Fig. 5, the information acquiring unit 402 includes: a first determining unit 501 and a first selecting unit 502; wherein,
the first determining unit 501 is configured to determine neighboring cells interfering with the pico cell according to a measurement result reported by UE of the pico eNB, so as to obtain the first related information;
the first selecting unit 502 is configured to select a neighboring cell that collides with the common reference signal of the pico cell in the neighboring cells interfering with the pico cell determined by the first determining unit 501, so as to obtain the second related information;
and the first notifying unit 401 is further configured to notify the second related information of the neighboring cell that collides with the common reference signal of the pico cell to the neighboring cell.

In this embodiment, similar to Embodiment 1, the first related information may be referred to as interference source neighboring cell set information, and the second related information may be referred to as CRS colliding neighboring cell set information, which shall not be described herein any further.

It can be seen from the above embodiment that the pico eNB 400 acquires the assistance information for interference cancellation via the information acquiring unit 402, and notifies the assistance information for interference cancellation to the neighboring cell, so that the neighboring cell configures the UE served by the neighboring cell having an ability to cancel interference with the assistance information for interference cancellation, and the UE served by the neighboring cell having an ability to cancel interference may perform interference cancellation according to the related information in performing RRM measurement on the pico cell, thereby solving the existed problem and avoiding the problem of too-late handover.

Fig. 6 is a schematic diagram of a structure of an eNB of Embodiment 5 of the present invention. The eNB 600 is an eNB of a neighboring cell neighboring a pico cell, and may be a macro eNB or a pico eNB. As shown in Fig. 6, the eNB 600 includes: a first receiving unit 601 and a second notifying unit 602; wherein,
the first receiving unit 601 is configured to receive assistance information for interference cancellation notified by the pico cell; wherein the assistance information for interference cancellation includes first related information of a neighboring cell interfering with the pico cell, or includes second related information of a neighboring cell that collides with the common reference signal of the pico cell in neighboring cells interfering with the pico cell;
and the second notifying unit 602 is configured to notify the assistance information for interference cancellation to UE of the eNB having an ability to cancel interference.

In an embodiment of the present invention, when the assistance information for interference cancellation includes the first related information, the eNB 600 further includes: a second selecting unit (not shown) configured to, after receiving the assistance information for interference cancellation notified by the pico cell, select a neighboring cell colliding with the common reference signal of the pico cell according to the first related information, so as to obtain the third related information;
and the second notifying unit 602 is further configured to notify the third related information of the selected neighboring cell colliding with the common reference signal of the pico cell to UE served by the neighboring cell having an ability to cancel interference.

In this embodiment, the third related information obtained by the eNB 600 in the above case may also be referred to as CRS colliding neighboring cell set information, and is identical to the second related information determined by the pico cell.

In this embodiment, the assistance information for interference cancellation is contained in a CellsToAddMod information element.

It can be seen from the above embodiment that the eNB 600 of a cell neighboring the pico eNB 400 receives via the first receiving unit 601 the assistance information for interference cancellation notified by the pico eNB, and the second notifying unit 602 of the eNB 600 configures the UE served by the neighboring cell having an ability to cancel interference with the assistance information for interference cancellation, and the UE served by the neighboring cell having an ability to cancel interference may perform interference cancellation according to the related information in performing RRM measurement on the pico cell, thereby solving the existed problem and avoiding the problem of too-late handover.

In Embodiment 5, the eNB may be a macro eNB or another pico eNB neighboring the pico eNB.

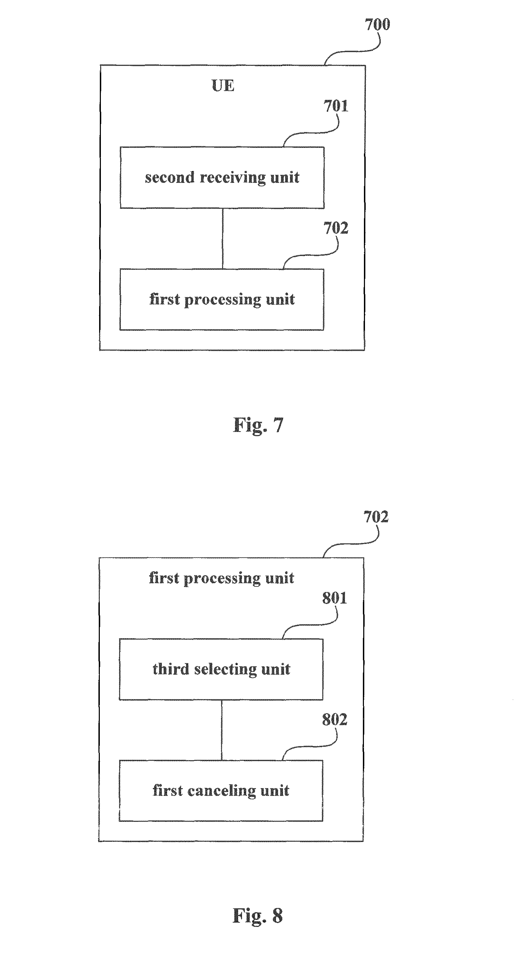

Fig. 7 is a schematic diagram of a structure of UE of Embodiment 6 of the present invention. The UE has an ability to cancel interference, and is UE of a neighboring cell neighboring a pico cell, that is, macro cell UE or another pico cell UE. As shown in Fig. 7, the UE 700 includes: a second receiving unit 701 and a first processing unit 702; wherein,
the second receiving unit 701 is configured to receive assistance information for interference cancellation notified by the neighboring cell, wherein the assistance information for interference cancellation includes first related information of a neighboring cell interfering with the pico cell, or includes second related information or third related information of a neighboring cell that collides with the common reference signal of the pico cell in neighboring cells interfering with the pico cell;
and the first processing unit 702 is configured to cancel interference of the common reference signal according to the assistance information for interference cancellation in performing radio resource management measurement on the pico cell.

In this embodiment, when the assistance information for interference cancellation includes the second related information or the third related information, the first processing unit 702 is further configured to cancel the interference caused by all the cells in the second related information or the third related information to the pico cell.

In another embodiment, when the assistance information for interference cancellation includes the first related information, as shown in Fig. 8, the first processing unit 702 includes: a third selecting unit 801 and a first canceling unit 802; wherein,
the third selecting unit 801 is configured to select a cell colliding with the common reference signal of the pico cell according to the first related information, and the first canceling unit 802 is configured to cancel the interference caused by the cell selected by the third selecting unit 801 to the pico cell.

It can be seen from the above embodiment that the UE 700 of the cell neighboring the pico eNB 400 having an ability to cancel CRS interference receives the assistance information for interference cancellation notified by the eNB served by the cell via the second receiving unit 701, and the UE 700 may perform interference cancellation according to the related information in performing RRM measurement on the pico cell, thereby solving the existed problem and avoiding the problem of too-late handover.

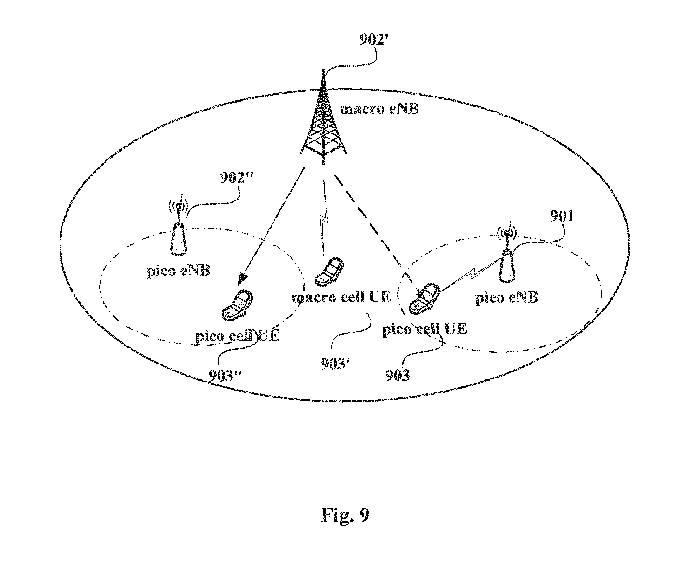

Fig. 9 is a schematic diagram of a structure of a heterogeneous network of Embodiment 7 of the present invention. As shown in Fig. 9, the network includes: a pico eNB 901, an eNB neighboring the pico eNB 901, and UE of a cell neighboring the pico eNB 901;
wherein, the pico eNB 901 is configured to notify assistance information for interference cancellation to a neighboring cell; wherein the assistance information for interference cancellation includes first related information of a neighboring cell interfering with the pico cell, or includes second related information of a neighboring cell that collides with the common reference signal of the pico cell in neighboring cells interfering with the pico cell;
the eNB neighboring the pico eNB 901 is configured to receive assistance information for interference cancellation notified by the pico eNB 901, and notify the assistance information for interference cancellation to UE served by the cell to which the eNB is located having an ability to cancel interference;
and the UE is configured to receive assistance information for interference cancellation notified by the eNB neighboring the pico eNB, and cancel interference of the common reference signal according to the assistance information for interference cancellation in performing radio resource management measurement on the pico cell.

In this embodiment, the eNB neighboring the pico eNB 901 may be a macro eNB, as shown in Fig. 9, such as a macro eNB 902', or, as shown in Fig. 9, may further include another pico cell, such as 902", the number of the pico eNB 902" being 1 or more. Accordingly, the UE of the cell neighboring the pico eNB may include macro UE 903', or the UE of the cell neighboring the pico eNB may include macro UE 903' and another pico cell UE 903".

In this embodiment, the structures of the pico eNB 901, the eNB neighboring the pico eNB and the UE are as described in embodiments 4, 5 and 6, which shall not be described herein any further.

The interference cancellation method of the present invention shall be described below with reference to the heterogeneous network shown in Fig. 9. In the heterogeneous network shown in Fig. 9, the pico cell is 901, and the UE of the pico cell is 903; the cell neighboring the pico cell may include a macro cell and other pico cells, with only one of the other pico cells being shown in the figure; however, the number is not limited to 1, and may be more than 1, and the macro eNB 902' and the macro cell UE 903', other pico eNBs, such as 902", and other pico eNB UE, such as 903", may be included, accordingly.

In the embodiment below, the first related information is referred to as interference source neighboring cell set information, the second related information is referred to as first CRS colliding neighboring cell set information, and the third related information is referred to as second CRS colliding neighboring cell set information.

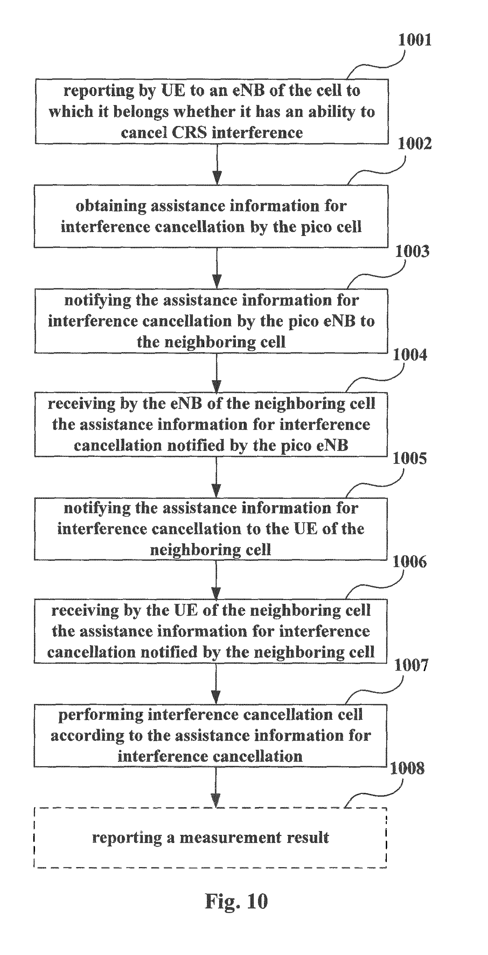

Fig. 10 is a flowchart of the interference cancellation method of Embodiment 8 of the present invention; wherein, description is given taking that the pico eNB 901 notifies interference source neighboring cell set information to the neighboring cell and the cell neighboring the pico cell notifies the interference source neighboring cell set information to the UE served by the cell as examples.

As shown in Fig. 10, the method includes:
step 1001: reporting by UE to an eNB of the cell to which it belongs whether it has an ability to cancel CRS interference;
wherein, the UE 903 and 903" of the pico cell and the UE of the macro cell report respectively to the pico eNBs 901/902" to which the UE 903 and 903" belong, and to the macro eNB 902' to which the macro UE belongs whether they have abilities to cancel CRS interference;
step 1002: obtaining assistance information for interference cancellation by the pico eNB 901;
in this embodiment, the pico eNB 901 determines the neighboring cell interfering with the pico eNB 901, i.e. an interference source neighboring cell, according to the measurement result reported by the UE 903 served by the pico cell;
wherein, the interference source neighboring cell may include one or more neighboring cells, referred to as "an interference source neighboring cell set"; and after determining the interference source neighboring cell, information of the interference source neighboring cell may be obtained, referred to as "interference source neighboring cell set information";
in this embodiment, the pico eNB 901 takes the "interference source neighboring cell set information" as the assistance information for interference cancellation, and information contained in the interference source neighboring cell set information is as described in the above embodiments, which shall not be described herein any further;
step 1003: notifying the assistance information for interference cancellation by the pico eNB 901 to the neighboring cell; wherein, the assistance information for interference cancellation is the "interference source neighboring cell set information";
in this embodiment, the pico eNB 901 may notify the assistance information for interference cancellation via an X2 interface;
wherein, the neighboring cell may be a macro cell or another pico cell;
furthermore, the pico eNB 901 may configure the UE served by the pico cell having an ability to cancel interference with the assistance information for interference cancellation, so that the UE served by the pico cell having an ability to cancel interference performs interference cancellation according to the assistance information for interference cancellation;
step 1004: receiving by the eNB of the neighboring cell the assistance information for interference cancellation notified by the pico eNB 901;
in this embodiment, as shown in Fig. 9, the macro eNB 902' and the other pico eNB 902", for example, receive the assistance information for interference cancellation;
step 1005: notifying the assistance information for interference cancellation by the eNB of the neighboring cell to the UE served by the neighboring cell;
in this embodiment, the UE served by the neighboring cell has an ability to cancel interference, and may be the macro cell UE 903' or the other pico cell UE 903";
wherein, after receiving the assistance information for interference cancellation, the eNB of the neighboring cell may configure the UE served by the neighboring cell with the assistance information for interference cancellation in performing measuring configuration of neighboring cell on the UE served by the neighboring cell, and then transmit the assistance information for interference cancellation to the UE served by the neighboring cell; and wherein, the assistance information for interference cancellation may be contained in CellsToAddMod IE or other IEs;
furthermore, the eNB of the neighboring cell may also transmit the assistance information for interference cancellation via other signaling;
step 1006: receiving by the UE of the neighboring cell the assistance information for interference cancellation notified by the neighboring cell;
for example, the macro cell UE 903' receives the assistance information for interference cancellation notified by the macro eNB 902', and the other pico cell UE 903" receives the assistance information for interference cancellation notified by the other pico eNB 902";
step 1007: performing interference cancellation by the UE of the neighboring cell according to the assistance information for interference cancellation in performing RRM measurement of the pico cell;
in this embodiment, the UE of the neighboring cell first selects a cell colliding with a CRS of the pico cell according to the assistance information for interference cancellation, and then cancels interference of the selected cell to the pico cell;
step 1008: reporting a measurement result by the UE of the neighboring cell;
wherein, this step is optional.

It can be seen from the above embodiment that the pico eNB 901 may acquire the interference source neighboring cell set information, and takes the information as the assistance information for interference cancellation and notifies to the cell neighboring the pico cell where the pico eNB 901 is present (a macro cell or other pico cells); the cell neighboring the pico cell notifies the assistance information for interference cancellation to the UE served by the cell having an ability to cancel interference, and the UE may perform interference cancellation according to the related information in performing RRM measurement on the pico cell, thereby solving the existed problem and avoiding the problem of too-late handover.

Embodiment 9 of the present invention further provides an interference cancellation method, with the parts identical to those in Embodiment 8 being omitted, and the parts different from those in Embodiment 8 being described.

A difference between Embodiment 9 and Embodiment 8 resides in that in step 1002, the acquiring the assistance information for interference cancellation by the pico cell includes:
determining neighboring cells interfering with the pico cell, i.e. interference source neighboring cells, by the pico cell according a measurement result reported by the UE served by the pico cell; and selecting a neighboring cell colliding with a CRS of the pico cell, i.e. a CRS colliding neighboring cell set, from the interference source neighboring cells, with its information being referred to as "first CRS colliding neighboring cell set information", and the first CRS colliding neighboring cell set information being taken as the assistance information for interference cancellation.

Furthermore, what is notified in steps 1005 and 1006 is the "first CRS colliding neighboring cell set information".

A difference between Embodiment 9 and Embodiment 8 resides in that in performing interference cancellation in step 1007, the UE cancels interference of all the cells to the pico cell in the first CRS colliding neighboring cell set information.

It can be seen from the above embodiment that the pico cell may notify the acquired second CRS colliding neighboring cell set information to the neighboring cell neighboring the pico cell, and after receiving the second CRS colliding neighboring cell set information, the cell neighboring the pico cell may configure the UE served by the cell having an ability to cancel interference with the above information, so that the UE may perform CRS interference cancellation according to the information in performing RRM measurement on the pico cell, thereby avoiding the problem of too-late handover.

Embodiment 10 of the present invention further provides an interference cancellation method, with the parts identical to those in Embodiment 8 being omitted, and the parts different from those in Embodiment 8 being described.

In Embodiment 10, after step 1004, after receiving the assistance information for interference cancellation notified by the pico cell, the eNB of the neighboring cell selects neighboring cells colliding with CRSs of the pico cell from the "interference source neighboring cell set information", the neighboring cells colliding with CRSs being referred to as "a second CRS colliding neighboring cell set", and corresponding information being referred to as "second CRS colliding neighboring cell set information".

Hence, in steps 1005 and 1006, the eNB of the neighboring cell notifies the second CRS colliding neighboring cell set information to the UE served by the neighboring cell having an ability to cancel interference.

A difference between Embodiment 10 and Embodiment 8 resides in that in performing interference cancellation in step 1007, the UE cancels interference of all the cells to the pico cell in the first CRS colliding neighboring cell set information.

It can be seen from the above embodiment that the pico cell may notify the acquired interference source neighboring cell set information to the neighboring cell neighboring the pico cell, and after receiving the interference source neighboring cell set information, the neighboring cell neighboring the pico cell may select second CRS colliding neighboring cell set therefrom, and configure the UE served by the neighboring cell having an ability to cancel interference with the second CRS colliding neighboring cell set information, so that the UE may perform CRS interference cancellation according to the information in performing RRM measurement on the pico cell, thereby avoiding the problem of too-late handover.

An embodiment of the present invention further provides a computer-readable program, wherein when the program is executed in a pico eNB, the program enables a computer to carry out the interference cancellation method for a common reference signal as described in embodiments 1 and 8-10 in the pico eNB.

An embodiment of the present invention further provides a storage medium in which a computer-readable program is stored, wherein the computer-readable program enables a computer to carry out the interference cancellation method for a common reference signal as described in embodiments 1 and 8-10 in a pico eNB.

An embodiment of the present invention further provides a computer-readable program, wherein when the program is executed in an eNB, the program enables a computer to carry out the interference cancellation method for a common reference signal as described in embodiments 2 and 8-10 in the eNB.

An embodiment of the present invention further provides a storage medium in which a computer-readable program is stored, wherein the computer-readable program enables a computer to carry out the interference cancellation method for a common reference signal as described in embodiments 2 and 8-10 in an eNB.

An embodiment of the present invention further provides a computer-readable program, wherein when the program is executed in UE, the program enables a computer to carry out the interference cancellation method for a common reference signal as described in embodiments 3 and 8-10 in the UE.

An embodiment of the present invention further provides a storage medium in which a computer-readable program is stored, wherein the computer-readable program enables a computer to carry out the interference cancellation method for a common reference signal as described in embodiments 3 and 8-10 in UE.

The above apparatuses and methods of the present invention may be implemented by hardware, or by hardware in combination with software. The present invention relates to such a computer-readable progam that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. An interference cancellation method for a common reference signal, comprising:
notifying assistance information for interference cancellation by a pico cell to a neighboring cell;
wherein the assistance information for interference cancellation comprises first related information of a neighboring cell interfering with the pico cell, or comprises second related information of a neighboring cell that collides with the common reference signal of the pico cell in neighboring cells interfering with the pico cell.

2. The method according to claim 1, wherein the first related information and the second related information comprise ID of a cell, the number of antenna ports, and multicast/broadcast SFN frame configuration information.

3. The method according to claim 1 or 2, wherein before notifying the assistance information for interference cancellation by the pico cell to the neighboring cell, the method further comprises: acquiring the assistance information for interference cancellation.

4. The method according to claim 3, wherein the acquiring the assistance information for interference cancellation comprises:
determining a neighboring cell interfering with the pico cell by the pico cell according to a measurement result reported by UE served by the pico cell;
and the notifying the assistance information for interference cancellation by the pico cell to the neighboring cell comprises: notifying the determined first related information of the neighboring cell to the neighboring cell.

5. The method according to claim 3, wherein the acquiring the assistance information for interference cancellation comprises:
determining neighboring cells interfering with the pico cell by the pico cell according to a measurement result reported by UE served by the pico cell; and
selecting a neighboring cell that collides with the common reference signal of the pico cell in the determined neighboring cells interfering with the pico cell;
and the notifying the assistance information for interference cancellation by the pico cell to the neighboring cell comprises: notifying the second related information of the neighboring cell that collides with the common reference signal of the pico cell to the neighboring cell.

6. An interference cancellation method for a common reference signal, comprising:
receiving, by a neighboring cell of a pico cell, assistance information for interference cancellation notified by the pico cell;
wherein the assistance information for interference cancellation comprises first related information of a neighboring cell interfering with the pico cell, or comprises second related information of a neighboring cell that collides with the common reference signal of the pico cell in neighboring cells interfering with the pico cell; and
notifying the assistance information for interference cancellation to UE served by the neighboring cell having an ability to cancel interference.

7. The method according to claim 6, wherein when the assistance information for interference cancellation comprises the first related information, after receiving assistance information for interference cancellation notified by the pico cell, the method further comprises:
selecting a neighboring cell colliding with the common reference signal of the pico cell according to the first related information;
and the notifying the assistance information for interference cancellation to UE served by the neighboring cell comprises:
notifying third related information of the selected neighboring cell colliding with the common reference signal of the pico cell to UE served by the neighboring cell having an ability to cancel interference.

8. The method according to claim 6, wherein the assistance information for interference cancellation is contained in a CellsToAddMod information element.

9. An interference cancellation method for a common reference signal, comprising:
receiving, by UE of a neighboring cell of a pico cell, assistance information for interference cancellation notified by the neighboring cell; wherein the assistance information for interference cancellation comprises first related information of a neighboring cell interfering with the pico cell, or comprises second related information or third related information of a neighboring cell that collides with the common reference signal of the pico cell in neighboring cells interfering with the pico cell; and
canceling interference of the common reference signal by the UE according to the assistance information for interference cancellation in performing radio resource management measurement of the pico cell.

10. The method according to claim 9, wherein when the assistance information for interference cancellation comprises the first related information, the canceling interference of the common reference signal according to the assistance information for interference cancellation comprises:
selecting a cell colliding with the common reference signal of the pico cell according to the first related information; and
canceling the interference caused by the selected cell to the pico cell;
and when the assistance information for interference cancellation comprises the second related information or third related information, the canceling interference of the common reference signal according to the assistance information for interference cancellation comprises:
canceling the interference caused by all the cells in the second related information or third related information to the pico cell.

11. A pico eNB, comprising:
a first notifying unit configured to notify assistance information for interference cancellation to a neighboring cell;
wherein the assistance information for interference cancellation comprises first related information of a neighboring cell interfering with the pico cell, or comprises second related information of a neighboring cell that collides with the common reference signal of the pico cell in neighboring cells interfering with the pico cell.

12. The pico eNB according to claim 11, wherein the pico eNB further comprises:
an information acquiring unit configured to acquire the assistance information for interference cancellation.

13. The pico eNB according to claim 11 or 12, wherein the information acquiring unit is configured to determine a neighboring cell interfering with the pico cell according to a measurement result reported by UE of the pico eNB;
and the first notifying unit is further configured to notify the determined first related information of the neighboring cell to the neighboring cell.

14. The pico eNB according to claim 11 or 12, wherein the information acquiring unit comprises:
a first determining unit configured to determine neighboring cells interfering with the pico cell according to a measurement result reported by UE of the pico eNB; and
a first selecting unit configured to select a neighboring cell that collides with the common reference signal of the pico cell in the determined neighboring cells interfering with the pico cell;
and the first notifying unit is further configured to notify the second related information of the neighboring cell that collides with the common reference signal of the pico cell to the neighboring cell.

15. An eNB, which is an eNB of a neighboring cell neighboring a pico cell, and the eNB comprising:
a first receiving unit configured to receive assistance information for interference cancellation notified by the pico cell; wherein the assistance information for interference cancellation comprises first related information of a neighboring cell interfering with the pico cell, or comprises second related information of a neighboring cell that collides with the common reference signal of the pico cell in neighboring cells interfering with the pico cell; and
a second notifying unit configured to notify the assistance information for interference cancellation to UE in the eNB having an ability to cancel interference.

16. The eNB according to claim 15, wherein the eNB further comprises:
a second selecting unit configured to, when the assistance information for interference cancellation comprises the first related information, after receiving assistance information for interference cancellation notified by the pico cell, select a neighboring cell colliding with the common reference signal of the pico cell according to the first related information;
and the second notifying unit is further configured to notify third related information of a selected neighboring cell colliding with the common reference signal of the pico cell to UE served by the neighboring cell having an ability to cancel interference.

17. The eNB according to claim 15, wherein the assistance information for interference cancellation is contained in a CellsToAddMod information element.

18. UE, having an ability to cancel interference and belonging to a neighboring cell neighboring a pico cell, the UE comprising:
a second receiving unit configured to receive assistance information for interference cancellation notified by the neighboring cell, wherein the assistance information for interference cancellation comprises first related information of a neighboring cell interfering with the pico cell, or comprises second related information or third related information of a neighboring cell that collides with the common reference signal of the pico cell in neighboring cells interfering with the pico cell; and
a first processing unit configured to cancel interference of the common reference signal according to the assistance information for interference cancellation in performing radio resource management measurement of the pico cell.

19. The UE according to claim 18, wherein when the assistance information for interference cancellation comprises the first related information, the first processing unit comprises:
a third selecting unit configured to select a cell colliding with the common reference signal of the pico cell according to the first related information; and
a first canceling unit configured to cancel the interference caused by the cell selected by the third selecting unit to the pico cell.

20. The UE according to claim 18, wherein when the assistance information for interference cancellation comprises the second related information or the third related information, the first processing unit is further configured to cancel the interference caused by all the cells in the second related information or the third related information to the pico cell.

21. A heterogeneous network system, comprising:
a pico eNB configured to notify assistance information for interference cancellation to a neighboring cell; wherein the assistance information for interference cancellation comprises first related information of a neighboring cell interfering with the pico cell, or comprises second related information of a neighboring cell that collides with the common reference signal of the pico cell in neighboring cells interfering with the pico cell;
a macro eNB and/or other pico eNBs, neighboring the pico cell, configured to receive assistance information for interference cancellation notified by the pico cell, and notify the assistance information for interference cancellation to UE served by the macro cell and/or the other pico cells having an ability to cancel interference; and
UE configured to receive assistance information for interference cancellation notified by the macro eNB and/or other pico eNBs neighboring the pico cell, and cancel interference of the common reference signal according to the assistance information for interference cancellation in performing radio resource management measurement of the pico cell.

22. The system according to claim 21, wherein the pico eNB is the pico eNB as claimed in any one of claims 11-14;
the macro eNB and/or other pico eNBs neighboring the pico cell is/are the eNB as claimed in any one of claims 15-17;
and the UE is the UE as claimed in any one of claims 18-20.

23. A computer-readable program, wherein when the program is executed in a pico eNB, the program enables the computer to carry out the interference cancellation method for a common reference signal as claimed in any one of claims 1-5 in the pico eNB.

24. A storage medium in which a computer-readable program is stored, wherein the computer-readable program enables the computer to carry out the interference cancellation method for a common reference signal as claimed in any one of claims 1-5 in a pico eNB.

25. A computer-readable program, wherein when the program is executed in an eNB, the program enables the computer to carry out the interference cancellation method for a common reference signal as claimed in any one of claims 6-8 in the eNB.

26. A storage medium in which a computer-readable program is stored, wherein the computer-readable program enables the computer to carry out the interference cancellation method for a common reference signal as claimed in any one of claims 6-8 in an eNB.

27. A computer-readable program, wherein when the program is executed in UE, the program enables the computer to carry out the interference cancellation method for a common reference signal as claimed in claim 9 or 10 in the UE.

28. A storage medium in which a computer-readable program is stored, wherein the computer-readable program enables the computer to carry out the interference cancellation method for a common reference signal as claimed in claim 9 or 10 in UE.
